# DEMANDE DE BREVET EUROPEEN

(11) **EP 2 960 642 A1**
(43) Date de publication de la demande: **30.12.2015**
(21) Numéro de dépôt: 15170983.9
(22) Date de dépôt: 08.06.2015
(51) Int. Cl.: G01N 21/3504, G01N 21/03

(54) **CHAMBRE OPTIQUE POUR DISPOSITIF DE DÉTECTION DE GAZ**

(30) Priorité: 26.06.2014 FR 1455984; 27.06.2014 FR 1456055
(71) Demandeur: Schneider Electric Industries SAS, 92500 Rueil-Malmaison (FR)
(72) Inventeur: CHIESI, Laurent, 38140 Reaumont (FR); RAISIGEL, Hynek, 38360 Sassenage (FR); CHABANIS, Gilles, 38140 Charnècles (FR); LAURENS, Paul, 38260 Pommier de Beaurepaire (FR); ALLELY, Mathias, 38260 Gillonnay (FR)
(74) Mandataire: Bié, Nicolas

(57) **Abrégé**

L'invention concerne une chambre optique (4) pour dispositif de détection de gaz qui comporte des moyens de réflexion pour réfléchir un rayonnement (R) issu d'une source de rayonnement (1) et pour le renvoyer vers un détecteur (2) de rayonnement, les moyens de réflexion comportant une première série de miroirs (Mi) adjacents et une deuxième série de miroirs (M'i) adjacents. Les miroirs (Mi) de la première série et les miroirs (M'i) de la deuxième série sont de type ellipsoïde de révolution tronqué. La première série de miroirs et la deuxième série de miroirs sont agencés l'une par rapport à l'autre de sorte que le rayonnement émis par la source de rayonnement (1) soit réfléchi alternativement par un miroir (M'i) de la deuxième série et par un miroir (Mi) de la première série et définisse un trajet optique allant de la source de rayonnement (1) jusqu'au détecteur de rayonnement (2).

## Description

### Domaine technique de l'invention

La présente invention se rapporte à une chambre optique pour dispositif de détection de gaz et au dispositif de détection de gaz intégrant ladite chambre optique. L'invention concerne notamment un dispositif de détection de gaz de type NDIR (pour « Non-Dispersive Infrared »).

### Etat de la technique

Il est connu du brevet EP1987346B1 un dispositif de détection de gaz comprenant une source de rayonnement agencée pour émettre des rayonnements lumineux, un détecteur de rayonnement et des moyens de réflexion formant une chambre optique dans laquelle sont envoyés les rayonnements lumineux émis. Les moyens de réflexion comprennent une pluralité de surfaces réfléchissantes adjacentes qui sont agencées de sorte que chaque rayonnement émis par la source est renvoyé directement vers le détecteur par l'une des surfaces réfléchissantes. Les surfaces réfléchissantes sont chacune définies par un arc de cercle ayant un rayon et un centre.

Une autre solution est décrite dans la demande de brevet EP2526404A1. Dans cette solution, un rayonnement émis par la source de rayonnement suit un trajet optique jusqu'au détecteur à travers un guide optique. Par rapport au brevet précédent, cette solution présente l'avantage d'allonger le trajet optique et donc d'augmenter la sensibilité du dispositif. Cependant, elle nécessite une attention particulière dans le positionnement de la source de rayonnement et du détecteur par rapport au guide optique. Le moindre déplacement des composants modifie sensiblement le signal obtenu en sortie et donc la précision du dispositif.

Le but de l'invention est de proposer une chambre optique pour dispositif de détection de gaz permettant au dispositif de disposer d'une sensibilité très satisfaisante, sans augmenter son encombrement. Le dispositif de l'invention incluant ladite chambre optique sera notamment peu sensible aux mouvements relatifs de la source de rayonnement et du détecteur par rapport à la chambre optique.

### Exposé de l'invention

Ce but est atteint par une chambre optique pour dispositif de détection de gaz comprenant des moyens de réflexion pour réfléchir un rayonnement issu d'une source de rayonnement et pour le renvoyer vers un détecteur de rayonnement. Les moyens de réflexion comportant une première série de miroirs adjacents et une deuxième série de miroirs adjacents. Les miroirs de la première série et les miroirs de la deuxième série sont à double foyer. La première série de miroirs et la deuxième série de miroirs sont agencés l'une par rapport à l'autre de sorte que le rayonnement émis par la source de rayonnement soit réfléchi alternativement par un miroir de la deuxième série et par un miroir de la première série et définisse un trajet optique allant de la source de rayonnement jusqu'au détecteur de rayonnement.

Selon l'invention, pour n miroirs dans la deuxième série et n-1 miroirs dans la première série, avec n supérieur ou égal à trois, les miroirs sont agencés de sorte que :
- un miroir M'i de la deuxième série est agencé pour focaliser le rayonnement vers un miroir Mi de la première série, le miroir Mi étant situé au foyer du miroir M'i de la deuxième série, i étant compris entre 1 et n-1,
- un miroir Mi de la première série est agencé pour focaliser le rayonnement vers un miroir M'i+1 de la deuxième série, i étant compris entre 1 et n-1,
- un miroir M'i de la deuxième série, avec i=n, est agencé pour focaliser le rayonnement vers le détecteur,
- un miroir M'i de la deuxième série, avec i=1, est agencé pour recevoir le rayonnement en provenance de la source de rayonnement.

Avantageusement, les miroirs de la première série et les miroirs de la deuxième série sont de type ellipsoïde de révolution tronqué.

Selon une autre particularité, les miroirs sont agencés de sorte que le trajet optique suivi par le rayonnement suive une trajectoire circulaire.

Selon une autre particularité, la chambre comporte deux parties fixées l'une sur l'autre, une partie inférieure dans laquelle sont réalisés les miroirs de la première série et une partie supérieure assemblée sur la partie inférieure et dans laquelle sont réalisés les miroirs de la deuxième série.

Selon une autre particularité, les miroirs de la première série et les miroirs de la deuxième série présentent une forme ellipsoïde et chaque forme ellipsoïde est obtenue par moulage dans la première partie et la deuxième partie de la chambre optique.

Selon une autre particularité, chaque miroir comporte une surface réfléchissante réalisée par dépôt d'une couche réfléchissante sur la forme ellipsoïde.

Selon une autre particularité, la couche réfléchissante est déposée par PVD ou par électrolyse et comporte par exemple de l'or.

Selon une autre particularité, la chambre optique comporte une entrée destinée à être située en vis-à-vis de la source de rayonnement et une sortie destinée à être située en vis-à-vis du détecteur de rayonnement.

L'invention concerne également un dispositif de détection comprenant une source de rayonnement agencée pour émettre un rayonnement, un détecteur de rayonnement et une chambre optique dans laquelle est situé le gaz à analyser et agencée pour transmettre le rayonnement de la source de rayonnement vers le détecteur de rayonnement, la chambre optique étant telle que définie ci-dessus.

Selon une particularité du dispositif, la source de rayonnement et le détecteur de rayonnement sont agencés l'un à côté de l'autre.

Selon une autre particularité, la source de rayonnement et le détecteur de rayonnement sont fixés sur une même carte électronique.

Selon une autre particularité, la source de rayonnement comporte au moins une diode électroluminescente.

Selon une autre particularité, le détecteur de rayonnement comporte au moins une photodiode.

### Brève description des figures

D'autres caractéristiques et avantages vont apparaître dans la description détaillée qui suit faite en regard des dessins annexés dans lesquels :
- la figure 1 représente, vu en éclaté et en perspective, le dispositif de détection de l'invention,
- la figure 2 représente en perspective la partie basse de la chambre optique du dispositif,
- la figure 3 illustre de manière schématique le principe de fonctionnement du dispositif de l'invention.

### Description détaillée d'au moins un mode de réalisation

L'invention concerne une chambre optique pour un dispositif de détection de gaz et le dispositif de détection de gaz correspondant. Le dispositif de détection est destiné à déterminer la concentration d'un gaz, tel que par exemple le dioxyde de carbone.

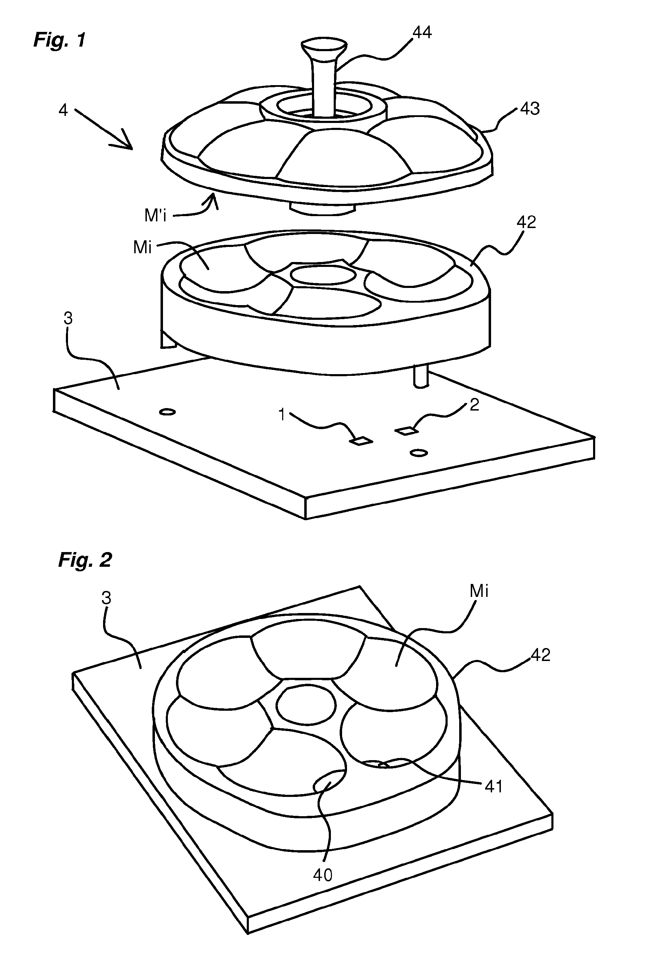

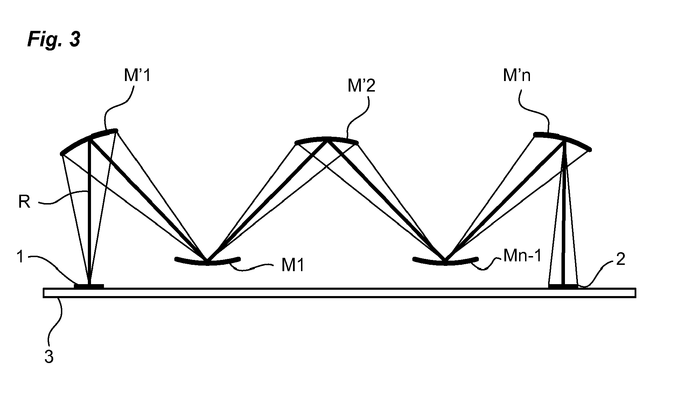

En référence à la figure 1, un tel dispositif comporte une source de rayonnement 1 comprenant par exemple au moins une diode électroluminescente et agencée pour émettre un rayonnement (R, figure 3).

Le dispositif comporte également un détecteur 2 de rayonnement agencé pour détecter le rayonnement émis par la source 1. Le détecteur 2 comporte par exemple au moins une photodiode destinée à capter le rayonnement émis par la source 1 et à le transformer en un signal électrique à traiter.

Avantageusement, la source de rayonnement 1 et le détecteur 2 sont fixés sur une carte électronique 3, intégrée dans le dispositif.

Idéalement, la source de rayonnement et le détecteur sont positionnés sur la carte l'un à côté de l'autre.

Le dispositif comporte également une chambre optique 4 fermée, à l'intérieur de laquelle est émis le rayonnement R. La chambre optique 4, objet de l'invention, comporte une entrée 40 devant laquelle est positionnée la source de rayonnement 1 et une sortie 41 devant laquelle est positionné le détecteur 2 (figure 2).

La chambre optique 4 comporte des moyens de réflexion agencés pour réfléchir le rayonnement R émis par la source 1 et le faire converger vers le détecteur 2.

Selon l'invention, les moyens de réflexion comprennent une première série de miroirs Mi adjacents et une deuxième série de miroirs M'i adjacents. La première série de miroirs Mi et la deuxième série de miroirs M'i sont agencées de sorte que le rayonnement R émis par la source 1 soit réfléchi et focalisé alternativement par un miroir de la deuxième série puis par un miroir de la première série de manière à suivre un trajet optique en forme de zigzag de la source de rayonnement 1 jusqu'au détecteur 2. Pour obtenir ce résultat, la chambre optique emploie des miroirs à double foyer. Chaque miroir comporte ainsi, si l'on suit le trajet optique, un premier foyer situé en amont du miroir et un deuxième foyer situé en aval du miroir.

La figure 3 illustre ce principe :
- la source de rayonnement 1 émet un rayonnement à destination d'un premier miroir M'1 de la deuxième série, la source de rayonnement 1 étant située au premier foyer du premier miroir M'1 de la deuxième série.
- le premier miroir M'1 de la deuxième série réfléchit le rayonnement R reçu et le focalise à destination d'un premier miroir M1 de la première série situé au deuxième foyer du premier miroir M'1 de la deuxième série.
- le premier miroir M1 de la première série réfléchit le rayonnement R reçu et le focalise vers un deuxième miroir M'2 de la deuxième série, distinct du premier miroir M'1 de la deuxième série et situé au deuxième foyer du premier miroir M1 de la première série (le premier miroir M'1 de la deuxième série occupant le premier foyer du premier miroir M1 de la première série),
- le deuxième miroir M'2 de la deuxième série réfléchit le rayonnement R reçu et le focalise vers un deuxième miroir M2 de la première série, distinct du premier miroir M1 de la première série et situé au deuxième foyer du deuxième miroir M'2 de la deuxième série (le premier miroir M1 de la première série occupant le premier foyer du deuxième miroir M'2 de la deuxième série).

Le processus décrit ci-dessus se poursuit entre miroirs de la première série et miroirs de la deuxième série jusqu'à ce que le rayonnement atteigne le détecteur 2. Les miroirs sont ainsi agencés pour faire progresser le rayonnement à l'intérieur de la chambre optique de la source de rayonnement 1 jusqu'au détecteur 2. L'emploi de miroirs à double foyer permet de focaliser le rayonnement de la source jusqu'au détecteur et d'obtenir ainsi un dispositif d'une grande sensibilité.

D'une manière générale, pour n miroirs dans la deuxième série et n-1 miroirs dans la première série, avec n supérieur ou égal à trois, on peut écrire que :
- un miroir M'i de la deuxième série focalise le rayonnement R vers un miroir Mi de la première série, le miroir Mi étant situé au foyer du miroir M'i de la deuxième série, i étant compris entre 1 et n-1,
- un miroir Mi de la première série focalise le rayonnement R vers un miroir M'i+1 de la deuxième série, i étant compris entre 1 et n-1,
- un miroir M'i de la deuxième série, avec i=n, focalise le rayonnement R vers le détecteur,
- un miroir M'i de la deuxième série, avec i=1, reçoit le rayonnement en provenance de la source de rayonnement.

Avantageusement, les miroirs à double foyer employés dans la première série et dans la deuxième série sont de type ellipsoïde de révolution tronqué. La forme ellipsoïde de révolution tronquée confère au miroir la propriété de posséder deux foyers, ce qui permet, grâce à l'agencement de l'invention, de focaliser un maximum du rayonnement sur le détecteur 2 et de limiter les rebonds à l'intérieur de la chambre optique 4.

Préférentiellement, le premier miroir M'1 de la deuxième série est orienté de manière à focaliser le rayonnement vers le premier miroir M1 de la première série tout en étant à l'aplomb de la source de rayonnement 1 et en ayant la source de rayonnement 1 située à son premier foyer. Préférentiellement, le dernier miroir M'n est situé à l'aplomb du détecteur 2 et est orienté de manière à focaliser le rayonnement provenant du miroir Mn-1 de la première série vers le détecteur 2, le détecteur étant situé à son deuxième foyer.

Chaque miroir est par exemple réalisé par dépôt d'une couche réfléchissante sur une pièce en matériau plastique. La couche réfléchissante est par exemple une couche d'or déposée par PVD (« Physical Vapor Déposition ») ou par électrolyse.

Avantageusement, la chambre optique 4 est formée de deux parties 42, 43 distinctes rapportées l'une sur l'autre, une partie supérieure 43 venant se fixer sur une partie inférieure 42 de manière à obtenir une chambre optique fermée. Une vis 44 est par exemple prévue pour la fixation des deux parties entre elles. Les miroirs Mi de la première série sont formés dans la partie inférieure 42 et les miroirs M'i de la deuxième série sont formés dans la partie supérieure 43. La partie inférieure 42 comporte une première ouverture formant ladite entrée 40 du rayonnement et une deuxième ouverture formant ladite sortie 41 du rayonnement R. Préférentiellement, la forme ellipsoïde des miroirs est obtenue par moulage dans la première partie 42 et dans la deuxième partie 43 de la chambre optique. Pour aller d'un miroir de la première série vers un miroir de la deuxième série, le rayonnement produit à l'intérieur de la chambre traverse à chaque fois le plan de jonction de la partie inférieure et de la partie supérieure de la chambre. Les miroirs de la première série et les miroirs de la deuxième série sont ainsi placées selon deux plans distincts parallèles au plan de jonction défini ci-dessus.

Selon l'invention, les miroirs Mi, M'i de la première série et de la deuxième série sont agencés de sorte que le rayonnement suive un trajet optique circulaire à l'intérieur de la chambre. Cet agencement permet notamment d'obtenir un trajet optique le plus long possible tout en limitant l'encombrement du dispositif.

Selon l'invention, la chambre optique 4 vient se fixer directement, par sa première partie 42, sur la carte électronique 3 de sorte que la source de rayonnement 1 et le détecteur 2 se trouve en vis-à-vis respectivement de l'entrée 40 de la chambre optique et de la sortie 41 de la chambre optique.

Le dispositif peut comporter des moyens de traitement (non représentés) intégrés permettant d'analyser le signal électrique obtenu en sortie du détecteur 2 par rapport au signal émis par la source 1 en vue d'en déduire la concentration du gaz présent dans la chambre optique 3. Ces moyens de traitement peuvent également être indépendants du dispositif et séparés de celui-ci.

La solution de l'invention présente ainsi plusieurs avantages listés ci-dessous :
- le dispositif est particulièrement compact, tout en permettant de proposer un trajet optique suffisamment long pour rendre le dispositif précis,
- le signal obtenu en sortie est relativement insensible aux mouvements relatifs de la source et du détecteur par rapport à l'entrée et à la sortie de la chambre optique,
- maitrise du nombre de rebonds subis par le rayonnement, ces rebonds atténuant le signal optique transmis au détecteur,
- faible consommation électrique due notamment à l'emploi d'une diode électroluminescente.

## Revendications

1. Chambre optique (4) pour dispositif de détection de gaz comprenant :
- Des moyens de réflexion pour réfléchir un rayonnement (R) issu d'une source de rayonnement (1) et pour le renvoyer vers un détecteur (2) de rayonnement,
**caractérisée en ce que** :
- Les moyens de réflexion comportent une première série de miroirs (Mi) adjacents et une deuxième série de miroirs (M'i) adjacents,
- Les miroirs (Mi) de la première série et les miroirs (M'i) de la deuxième série sont à double foyer,
- La première série de miroirs et la deuxième série de miroirs sont agencés l'une par rapport à l'autre de sorte que le rayonnement émis par la source de rayonnement (1) soit réfléchi alternativement par un miroir (M'i) de la deuxième série et par un miroir (Mi) de la première série et définisse un trajet optique allant de la source de rayonnement (1) jusqu'au détecteur de rayonnement (2),
- La chambre optique comporte deux parties fixées l'une sur l'autre, une partie inférieure (42) dans laquelle sont réalisés les miroirs (Mi) de la première série et une partie supérieure (43) assemblée sur la partie inférieure et dans laquelle sont réalisés les miroirs (M'i) de la deuxième série.

2. Chambre optique selon la revendication 1, **caractérisée en ce que**, pour n miroirs dans la deuxième série et n-1 miroirs dans la première série, avec n supérieur ou égal à trois, les miroirs sont agencés de sorte que :
- un miroir M'i de la deuxième série est agencé pour focaliser le rayonnement vers un miroir Mi de la première série, le miroir Mi étant situé au foyer du miroir M'i de la deuxième série, i étant compris entre 1 et n-1,
- un miroir Mi de la première série, situé au foyer du miroir M'i, est agencé pour focaliser le rayonnement vers un miroir M'i+1 de la deuxième série, i étant compris entre 1 et n-1,
- un miroir M'i de la deuxième série, avec i=n, est agencé pour focaliser le rayonnement vers le détecteur,
- un miroir M'i de la deuxième série, avec i=1, est agencé pour recevoir le rayonnement en provenance de la source de rayonnement.

3. Chambre optique selon la revendication 1 ou 2, **caractérisé en ce que** les miroirs (Mi) de la première série et les miroirs (M'i) de la deuxième série sont de type ellipsoïde de révolution tronqué.

4. Chambre optique selon la revendication 1, **caractérisée en ce que** les miroirs (Mi) de la première série et les miroirs (M'i) de la deuxième série présentent une forme ellipsoïde et **en ce que** chaque forme ellipsoïde est obtenue par moulage dans la première partie (42) et la deuxième partie (43) de la chambre optique.

5. Chambre optique selon revendication 4, **caractérisée en ce que** chaque miroir comporte une surface réfléchissante réalisée par dépôt d'une couche réfléchissante sur la forme ellipsoïde.

6. Chambre optique selon la revendication 5, **caractérisée en ce que** la couche réfléchissante est déposée par PVD ou par électrolyse.

7. Chambre optique selon la revendication 5 ou 6, **caractérisée en ce que** la couche réfléchissante comporte de l'or.

8. Chambre optique selon l'une des revendications 1 à 7, **caractérisée en ce qu'**elle comporte une entrée (40) destinée à être située en vis-à-vis de la source de rayonnement et une sortie (41) destinée à être située en vis-à-vis du détecteur de rayonnement.

9. Dispositif de détection comprenant une source de rayonnement (1) agencée pour émettre un rayonnement (R), un détecteur (2) de rayonnement et une chambre optique (4) dans laquelle est situé le gaz à analyser et agencée pour transmettre le rayonnement (R) de la source de rayonnement vers le détecteur (2) de rayonnement, **caractérisé en ce que** la chambre optique (4) est telle que définie dans l'une des revendications 1 à 8.

10. Dispositif selon la revendication 9, **caractérisé en ce que** la source de rayonnement (1) et le détecteur (2) de rayonnement sont agencés l'un à côté de l'autre.

11. Dispositif selon la revendication 10, **caractérisé en ce que** la source de rayonnement (1) et le détecteur (2) de rayonnement sont fixés sur une même carte électronique (3).

12. Dispositif selon l'une des revendications 9 à 11, **caractérisé en ce que** la source de rayonnement (1) comporte au moins une diode électroluminescente.

13. Dispositif selon l'une des revendications 9 à 12, **caractérisé en ce que** le détecteur (2) de rayonnement comporte au moins une photodiode.
